# EUROPÄISCHE PATENTSCHRIFT

(11) **EP 3 350 015 B1**
(45) Veröffentlichungstag und Bekanntmachung des Hinweises auf die Patenterteilung: **11.11.2020**
(21) Anmeldenummer: 16766485.3
(22) Anmeldetag: 15.09.2016
(51) Int. Cl.: B60L 53/36, B60L 53/38, B60L 53/39, B60L 53/60

(54) **VERFAHREN ZUR ERMITTLUNG EINER EINE RELATIVPOSITION EINES KRAFTFAHRZEUGS ZU EINER STATIONÄREN, ANZUFAHRENDEN LADEEINRICHTUNG BESCHREIBENDEN POSITIONSINFORMATION UND ANORDNUNG AUS EINEM KRAFTFAHRZEUG UND EINER STATIONÄREN, ANZUFAHRENDEN LADEEINRICHTUNG**
METHOD FOR ASCERTAINING POSITIONAL DATA DESCRIBING A POSITION OF A MOTOR VEHICLE RELATIVE TO A STATIONARY CHARGING DEVICE AS A DESTINATION, AND ARRANGEMENT CONSISTING OF A MOTOR VEHICLE AND A STATIONARY CHARGING DEVICE AS A DESTINATION
PROCÉDÉ DE DÉTERMINATION D'UNE INFORMATION DE POSITION DÉCRIVANT UNE POSITION RELATIVE D'UN VÉHICULE AUTOMOBILE PAR RAPPORT À UN DISPOSITIF DE CHARGE IMMOBILE À APPROCHER ET ENSEMBLE CONSTITUÉ D'UN VÉHICULE AUTOMOBILE ET D'UN DISPOSITIF DE CHARGE FIXE À APPROCHER

(30) Priorität: 19.09.2015 DE 102015012368
(43) Veröffentlichungstag der Anmeldung: 25.07.2018
(73) Patentinhaber: Audi AG, 85045 Ingolstadt (DE)
(72) Erfinder: PEER, Reinhard, 85080 Gaimersheim (DE); HARDT, Matthias, 85579 Neubiberg (DE)
(86) Internationale Anmeldenummer: PCT/EP2016/001552
(87) Internationale Veröffentlichungsnummer: WO 2017/045758

(56) Entgegenhaltungen:
- WO-A1-2014/023651
- WO-A1-2014/023651
- DE-A1-102008 004 474
- DE-A1-102012 023 708
- DE-A1-102013 110 280
- DE-A1-102013 110 280
- DE-A1-102013 208 678
- JP-A- 2012 034 546
- JP-A- 2012 034 546
- US-A1- 2011 199 028
- US-A1- 2011 199 028
- US-A1- 2014 035 526
- US-A1- 2014 035 526

## Beschreibung

Die Erfindung betrifft ein Verfahren zur Ermittlung einer eine Relativposition eines Kraftfahrzeugs zu einer stationären, anzufahrenden Ladeeinrichtung beschreibenden Positionsinformation. Daneben betrifft die Erfindung eine Anordnung aus einem Kraftfahrzeug und einer stationären, anzufahrenden Ladeeinrichtung.

Das Laden elektrischer Energiespeicher von Kraftfahrzeugen durch eine in oder auf einem zu überfahrenden Untergrund angeordnete Ladeeinrichtung erfordert typischerweise eine exakte Feinpositionierung in der Größenordnung von Zentimetern, um beispielsweise bei einer induktiven Energieübertragung einen möglichst hohen Wirkungsgrad zu erzielen. Durch Verfahren der eingangs genannten Art sollen Fahrer bzw. das Kraftfahrzeug wenigstens teilweise autonom führende Fahrzeugsysteme bei der Ausrichtung des Kraftfahrzeugs zu der anzufahrenden Ladeeinrichtung unterstützt werden, was die Ermittlung einer möglichst präzisen Positionsinformation, die diese Relativposition beschreibt, erfordert. Dazu wurde bereits vorgeschlagen, über die Primärspule ein zusätzliches niederenergetisches Signal, das der Feinpositionierung dient, zu übertragen oder über eine ladungseinrichtungsseitige Zusatzantenne ein Signal auszusenden, auf welches ein digitaler Identifizierungscode aufgeprägt ist. Ebenso ist es bekannt, ein Signal vom Fahrzeug auszusenden, welches von mehreren lagereinrichtungsseitigen Antennen empfangen und zur Ermittlung der Positionsinformation ausgewertet wird.

Die DE 10 2013 110 280 A1 beschreibt ein Positionsbestimmungssystem für ein Fahrzeug, welches mittels eines induktiven Energieübertragungssystems aufladbar ist, wobei stationär zusätzliche Spulen und/oder Antennen angeordnet sind, wobei eine zusätzliche primärseitige Spule und/oder Antenne einen primärseitigen Sender bildet und mindestens eine zusätzliche am Fahrzeug angeordnete Spule und/oder Antenne mindestens einen Empfänger zum Empfangen der Signale mindestens einen primärseitigen Senders bildet. Dazu sind mindestens zwei Empfänger und/oder mindestens zwei Sender vorhanden sind, so dass das Positionsbestimmungssystem mittels der gesendeten Signale der zusätzlichen Spulen bzw. Antennen den Abstand und/oder die Ausrichtung des Fahrzeugs relativ zur stationär angeordneten primärseitigen Energieübertragungsvorrichtung ermittelt.

Die DE 10 2013 298 678 A1 offenbart ein System zur Ausrichtung eines Kraftfahrzeugs, umfassend eine an einer stationären Einrichtung angeordnete Sendeeinrichtung zur Abstrahlung elektromagnetischer Wellen und eine an dem Fahrzeug angeordnete Empfangseinrichtung mit wenigstens zwei Empfangseinheiten zur Erfassung der von der Sendeeinrichtung abgestrahlten elektromagnetischen Wellen. Dabei ist vorgesehen, dass die Sendeeinrichtung wenigstens zwei voneinander beabstandete Sendeeinheiten umfasst, wobei eine Auswerteeinrichtung dazu ausgebildet ist, aufgrund des Abstands und der Orientierung der wenigstens zwei Sendeeinheiten zu den wenigstens zwei Empfangseinheiten einen Winkel zwischen einer Bezugsachse des Fahrzeugs zur stationären Einrichtung zu berechnen.

Derartige Verfahren und Systeme sind bei der Verwendung von Spulen wegen ihrer geringen Reichweite bzw. bei der Verwendung weiterer Sendeeinheiten in ihrer Nähe aufgrund von Signalüberlagerungen äußerst störanfällig.

Der Erfindung liegt mithin die Aufgabe zugrunde, eine Möglichkeit zur Ermittlung einer eine Relativposition eines Kraftfahrzeugs zu einer stationär anzufahrenden Ladeeinrichtung beschreibenden Positionsinformation anzugeben, die weniger störanfällig gegenüber externen Einflüssen ist.

Diese Aufgabe wird erfindungsgemäß gelöst durch ein Verfahren zur Ermittlung einer eine Relativposition eines Kraftfahrzeugs zu einer stationären anzufahrenden Ladeeinrichtung beschreibenden Positionsinformation, wobei ladeeinrichtungsseitig mehrere elektromagnetische Sendesignale von jeweils unterschiedlichen in einem Sendepositionsmuster angeordneten Sendepositionen mit jeweils wenigstens einer für das Kraftfahrzeug beim Empfangen unterscheidbaren Signaleigenschaft abgestrahlt werden, wonach für jedes empfangene Empfangssignal eine seine Empfangsstärke beschreibende Signalstärkeinformation erzeugt und daraus unter Berücksichtigung einer das Sendepositionsmuster und eine Zuordnung der Sendeposition zu den Signaleigenschaften beschreibenden Senderinformationen die Positionsinformation ermittelt wird.

Die Erfindung beruht auf der Überlegung, die Empfangsstärken von Sendesignalen, die jeweils von einer anderen Sendeposition abgestrahlt werden, anders gesagt ein Empfangsstärkeprofil, auszuwerten und in Kenntnis des Sendepositionsmusters und der Zuordnung von Sendepositionen und Signaleigenschaften daraus die Relativposition zu bestimmen. Dabei ist es wesentlich, dass die Signaleigenschaften so gewählt werden, dass eine kraftfahrzeugseitig vorzusehende Empfangseinrichtung eine Unterscheidung von Empfangssignalen hinsichtlich der Signaleigenschaften vornehmen kann. In Abhängigkeit des Verhältnisses der durch die Signalstärkeinformation beschriebenen Signalstärken der Empfangssignale kann so die Relativposition des Kraftfahrzeugs bestimmt werden. Mit anderen Worten korreliert das Verhältnis der Empfangsstärken bezüglich jeder einzelnen Signaleigenschaft mit der Ausrichtung des Kraftfahrzeugs zur Ladeeinrichtung, woraus sich die Positionsinformation berechnen lässt. Es wird besonders bevorzugt, wenn die unterschiedlichen Sendepositionen durch entsprechend angeordnete Antenneneinheiten einer ladeeinrichtungsseitigen Sendeeinrichtung realisiert werden. Die Antenneneinheiten können über Sendespulen als Antennen verfügen.

Das erfindungsgemäße Verfahren weist somit den Vorteil auf, dass gegenüber herkömmlichen Verfahren, die eine zusätzliche Information über das magnetische Feld der Ladeeinrichtung übertragen, aufgrund der Nutzung elektromagnetischer Wellen, insbesondere also Funkwellen, eine wesentlich höhere störungsfreie Sendereichweite erzielbar ist. Darüber hinaus kann durch geeignete Wahl der Signaleigenschaften eine Störung durch Überlagerungseffekte von anderen Signalen ausgeglichen werden, da durch die mehreren Sendepositionen mit unterschiedlichen Signaleigenschaften redundante Informationen gegeben sind. Insgesamt ermöglicht das Verfahren so einen wesentlich störungsärmeren Betrieb.

Es wird bei dem erfindungsgemäßen Verfahren besonders bevorzugt, wenn sich hinsichtlich ihrer Frequenz als Signaleigenschaft unterscheidende Sendesignale abgestrahlt werden. Die einzelnen Frequenzen für jede Sendeposition werden dabei zweckmäßigerweise so gewählt, dass ihre Signale durch empfangseinrichtungsseitige Filter hinreichend genau voneinander trennbar sind, um die Unterscheidbarkeit zu gewährleisten. Mit besonderem Vorteil kann so durch einen ausreichend breitbandigen Empfänger für alle vorgesehenen Frequenzen der Sendesignale mit lediglich einer für alle Frequenzen geeigneten empfängerseitigen Antenne die Positionsinformation ermittelt werden. Ladeeinrichtungsseitig können beispielsweise gleichartige Antenneneinheiten mit ausreichend breitbandigen Abstrahlcharakteristiken verwendet werden.

Alternativ oder zusätzlich ist es auch möglich, dass sich hinsichtlich ihrer Polarisation unterscheidende Sendesignale abgestrahlt werden. In diesem Fall wird die Unterscheidbarkeit der Signaleigenschaften durch die Polarisationsdämpfung der einzelnen Sendesignale erzielt, wobei sowohl empfängerseitig als auch senderseitig für jede Signaleigenschaft eine entsprechend polarisiert abstrahlende Antenneneinheit vorzusehen ist. Beispielsweise lässt sich durch die Wahl von horizontaler, vertikaler, linkszirkulärer und rechtszirkulärer Polarisation eine Unterscheidbarkeit von vier Sendesignalen realisieren.

Daneben ist es alternativ oder zusätzlich denkbar, dass sich hinsichtlich ihres Sendezeitraums in einem zeitlichen Senderaster als Signaleigenschaft unterscheidende Sendesignale abgestrahlt werden. Dabei kann sowohl empfängerseitig als auch senderseitig lediglich ein Antennentyp verwendet werden, wobei die einzelnen Sendesignale mit zeitlichen Abständen nacheinander auf einer Frequenz abgestrahlt werden und durch ihren jeweiligen Sendezeitraum unterscheidbar sind. Dabei ist selbstverständlich möglich, beispielsweise durch Pilotsignale oder Sendepausen den Anfang oder das Ende des Senderasters zu markieren.

Es ist darüber hinaus zur Vermeidung von Interferenzeffekten zwischen den einzelnen Sendesignalen von besonderem Vorteil, wenn die Sendesignale in einem Frequenzbereich zwischen 30 kHz und 3 MHz abgestrahlt werden. Mithin wird die Nutzung des Lang- und/oder Längstwellenbereichs (LW bzw. VLF) vorgeschlagen.

Es ist bei dem erfindungsgemäßen Verfahren des Weiteren zweckmäßig, wenn wenigstens vier, insbesondere genau vier, Sendepositionen verwendet werden. Dadurch können, wenn sich jeweils zwei Sendepositionen auf sich schneidenden Geraden des Sendemusters befinden, besonders einfach Relativpositionen in zwei Raumrichtungen ermittelt werden. Die Verwendung von genau vier Sendepositionen ermöglicht einen solchen Effekt mit dem geringsten materiellen Aufwand. Es ist dabei besonders zweckmäßig, wenn als Sendepositionsmuster Eckpunkte eines Quadrats verwendet werden. Eine solche gleichmäßige Verteilung ermöglicht bei der Verwendung von vier Sendepositionen die beste Auflösung bezüglich der beiden Raumrichtungen.

Es wird bei dem erfindungsgemäßen Verfahren besonders bevorzugt, wenn wenigstens eine weitere Ladeeinrichtung vorhanden ist, welche ihrerseits Sendesignale von Sendepositionen desselben Sendepositionsmusters abstrahlt, wobei unmittelbar benachbarte weitere Ladeeinrichtungen unterschiedliche Zuordnungen der Sendepositionen zu den Signaleigenschaften aufweisen, wobei als Empfangssignal überlagerte Sendesignale der Ladeeinrichtung empfangen werden und eine zusätzlich die Zuordnung der wenigstens einen weiteren Ladeeinrichtungen und eine Relativposition der Sendemuster der Ladeeinrichtungen beschreibende Sendesignalinformation zur Bestimmung der Positionsinformation verwendet wird. Ein solcher Fall ist beispielsweise bei nebeneinander angeordneten Parkplätzen mit jeweils einer Ladeeinrichtung gegeben, wobei eine davon durch das Kraftfahrzeug anzufahren ist. Überlagerungen der Sendesignale wirken sich dabei nicht als Störungen aus, sondern werden bei der Ermittlung der Relativposition mitberücksichtigt. Dazu weisen unmittelbar benachbarte weitere Ladeeinrichtungen eine unterschiedliche Zuordnung der Sendepositionen zu den Signaleigenschaften auf, welche bei der Ermittlung der Positionsinformation bekannt ist, so dass sich anhand der aus den Überlagerungen ergebenden Empfangsstärken die Relativposition des Kraftfahrzeugs zu der anzufahrenden Ladeeinrichtung ermitteln lässt. Vorteilhafterweise können so mehrere Ladeeinrichtungen benachbart angeordnet und parallel betrieben werden können. Dabei werden nicht nur Störungen zwischen den Sendesignalen der Ladeeinrichtungen vermieden, sondern die Überlagerungseffekte für eine verbesserte Positionsbestimmung ohne weiteren Zusatzaufwand genutzt.

Es wird dabei besonders bevorzugt, wenn für jeweils zwei unmittelbar benachbarte Ladeeinrichtungen eine um einen vorgegebenen Winkel gedrehte Zuordnung ihrer Sendeposition zu den Signaleigenschaften verwendet werden. Dies betrifft insbesondere Positionsmuster, die sich durch eine Drehung auf sich selbst abbilden, insbesondere das zuvor erwähnte Sendepositionsmuster in Form von Eckpunkten eines Quadrats. Zweckmäßigerweise beträgt der Drehwinkel 90°.

Es ist bei dem erfindungsgemäßen Verfahren besonders vorteilhaft, wenn die Sendeleistung der Sendesignale derart gewählt wird, dass deren Signaleigenschaften für das Kraftfahrzeug in einer Entfernung von höchstens 24 m, bevorzugt höchstens 12 m, besonders bevorzugt höchstens 6 m, zu der jeweiligen Sendeposition unterscheidbar sind. Es lassen sich so mit geringem Aufwand an Sendeleistung für die Feinpositionierung des Kraftfahrzeugs geeignete Nahbereichsanwendungen realisieren, wobei die vorgenannten Abstände größer sind als diejenigen, die sich bei einer spulenbasierten Übertragung von der Positionierung dienenden Signalen störungsfrei erzielen lassen.

Schließlich ist es bei dem erfindungsgemäßen Verfahren besonders bevorzugt, dass kraftfahrzeugseitig eine Fahrerinformationseinrichtung verwendet wird, welche eine in Abhängigkeit der Positionsinformation ermittelte, eine ein zum Erreichen einer vorgegebenen Position und/oder Ausrichtung bezüglich der anzufahrenden Ladeeinrichtung umzusetzendes Fahrmanöver beschreibende Fahrerinformation an einen Fahrer des Kraftfahrzeugs ausgibt. Dazu kann die Fahrerinformationseinrichtung beispielsweise eine optische und/oder akustische und/oder haptische Ausgabeeinrichtung aufweisen, die für den Fahrer wahrnehmbare Anweisungen zu vorzunehmenden Lenk- und/oder Brems- und/oder Beschleunigungsaktionen ausgibt. Alternativ oder zusätzlich kann vorgesehen sein, dass kraftfahrzeugseitig eine eine Quer- und/oder Längsführung des Kraftfahrzeugs beeinflussende Fahrzeugführungseinrichtung verwendet wird, welche unter Berücksichtigung der Positionsinformation ein zum Erreichen einer vorgegebenen Position und/oder Ausrichtung bezüglich der anzufahrenden Ladeeinrichtung umzusetzendes Fahrmanöver durchzuführt. Derartige Fahrzeugführungseinrichtungen sind beispielsweise aus Einparkeinrichtungen bekannt, die ohnehin im Kraftfahrzeug vorgesehen sein können, so dass diese ein automatisches Anfahren der Ladeeinrichtung ohne konstruktiven Zusatzaufwand ermöglichen.

Daneben betrifft die Erfindung eine Anordnung aus einem Kraftfahrzeug und einer stationären, anzufahrenden Ladeeinrichtung, wobei ladeeinrichtungsseitig eine Sendeeinrichtung zum Abstrahlen elektromagnetischer Sendesignale von jeweils unterschiedlichen Sendepositionen mit jeweils einer für eine kraftfahrzeugseitig vorgesehene Empfangseinrichtung unterscheidbaren Signaleigenschaft vorgesehen ist, wobei eine zur Durchführung des erfindungsgemäßen Verfahrens ausgebildete Steuereinrichtung vorgesehen ist.

Es ist bei der erfindungsgemäßen Anordnung besonders zweckmäßig, wenn die Ladeeinrichtung eine primärseitige Induktionsladevorrichtung umfasst, wobei das Kraftfahrzeug eine sekundärseitige Induktionsladevorrichtung zum Empfang elektrischer Energie von der primärseitigen Induktionsladevorrichtung aufweist. Dies ermöglicht ein besonders komfortables kontaktloses Laden des Kraftfahrzeugs, wobei die bei induktiver Energieübertragung erforderliche Positionsüberdeckung mit einer Genauigkeit in einer Größenordnung von Zentimetern realisiert werden kann. Es kann bei der primärseitigen Induktionsladeeinrichtung darüber hinaus vorgesehen sein, dass diese mehrere Induktionsladeeinheiten aufweist, die in Abhängigkeit der Eigenschaften der sekundärseitigen Induktionsladevorrichtung durch die Steuereinrichtung einzeln derart ansteuerbar sind, dass ein Übertragungsmagnetfeld generiert wird, das an unterschiedliche sekundärseitige Ladevorrichtungen Spulengeometrien auf Fahrzeugseite anpassbar ist. Besonders bevorzugt sind vier Induktionsladeeinheiten vorgesehen, welche in den Eckpunkten eines gedachten Quadrats angeordnet sind, wobei ein ebenfalls quadratische Sendepositionsmuster verwendet wird, welches um 45° versetzt, die Induktionsladeeinheiten umgebend, angeordnet ist. Auf diese Weise lässt sich eine besonders raumsparende Anordnung realisieren. Selbstverständlich können die primärseitigen Induktionsladevorrichtungen und die sekundärseitige Induktionsladevorrichtung auch im Rahmen des erfindungsgemäßen Verfahrens verwendet werden.

Sämtliche Ausführungen zum erfindungsgemäßen Verfahren lassen sich darüber hinaus auf die erfindungsgemäße Anordnung aus einem Kraftfahrzeug und einer stationären, anzufahrenden Ladeeinrichtung übertragen, so dass auch mit dieser die jeweils genannten Vorteile erzielt werden können.

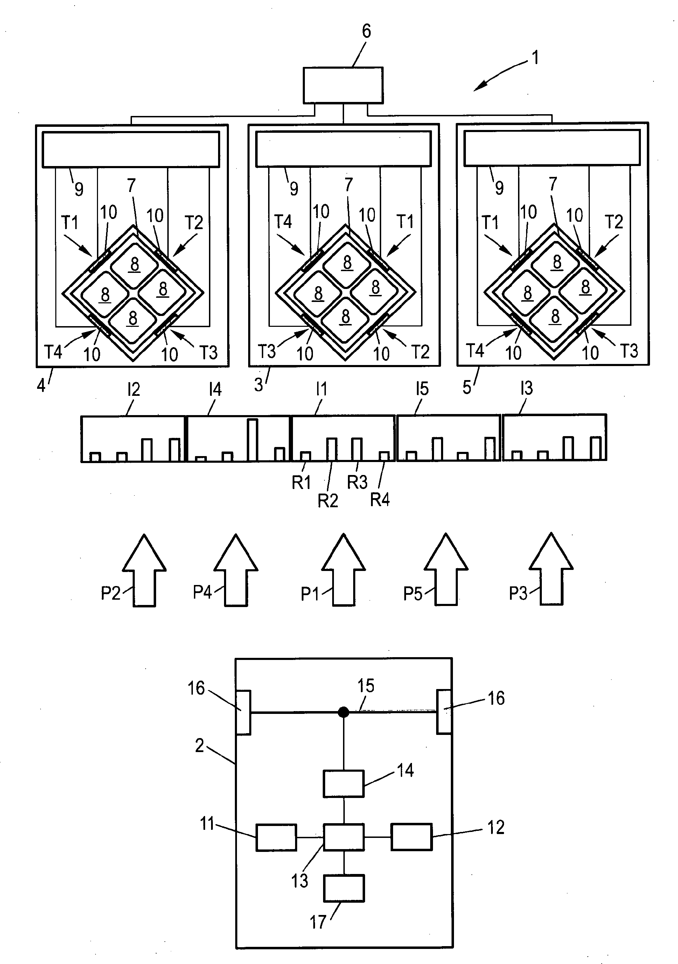

Weitere Vorteile und Einzelheiten der Erfindung ergeben sich aus dem im Folgenden beschriebenen Ausführungsbeispiel sowie anhand der Zeichnung.

Die einzige Figur zeigt ein Ausführungsbeispiel einer Anordnung 1 aus einem Kraftfahrzeug 2 und einer stationären, anzufahrenden Ladeeinrichtung 3, wobei zwei weitere, unmittelbar benachbarte Ladeeinrichtungen 4 und 5 Teil der Anordnung 1 sind. Daneben weist die Anordnung 1 ein ladeeinrichtungsseitiges Steuergerät 6 auf, das ebenso zur Anordnung 1 gehört.

Jede Ladeeinrichtung 3, 4, 5 umfasst eine primärseitige Induktionsladevorrichtung 7 mit vier einzeln ansteuerbaren Induktionsladeeinheiten 8 und eine Sendeeinrichtung 9 mit vier Antenneneinheiten 10. Diese definieren Sendepositionen für von der Sendeeinrichtung 9 abzustrahlende Sendesignale, wobei die Sendepositionen in einem Sendepositionsmuster, das den Eckpunkten eines Quadrats entspricht, angeordnet sind. Bezüglich dieser Sendepositionen sind die Induktionsladeeinheiten 8, die ebenfalls in einem quadratischen Muster angeordnet sind, um 45° versetzt, mithin diagonal, angeordnet.

Das Kraftfahrzeug 2 weist eine sekundärseitige Induktionsladevorrichtung 11 und eine Empfangseinrichtung 12 auf, die durch ein Steuergerät 13 des Kraftfahrzeugs 2 ansteuerbar sind. Daneben umfasst das Kraftfahrzeug 2 eine Fahrzeugführungseinrichtung 14, welche auf eine lenkbare Achse 15 mit zwei Rädern 16 zur Quer- und Längsführung des Kraftfahrzeugs 2 wirkt. Selbstverständlich kann die Fahrzeugführungseinrichtung 14 auch alternativ oder zusätzlich auf eine nicht lenkbare, aber antreibbare nicht dargestellte weitere Achse des Fahrzeugs 2 wirken. Ferner ist eine Fahrerinformationseinrichtung 17 vorgesehen, welche mittels einer nicht gezeigten Ausgabeeinheit akustische und/oder optische und/oder haptische Informationen zur Durchführung eines Fahrzeugmanövers an einen Fahrer des Kraftfahrzeugs 2 ausgibt. Sowohl die Fahrzeugführungseinrichtung 14 als auch die Fahrerinformationseinrichtung 17 sind vom Steuergerät 13 ansteuerbar.

Die Steuergeräte 6, 13 bilden eine Steuereinrichtung der Anordnung 1, welche zur Durchführung eines Verfahrens zur Ermittlung einer eine Relativposition des Kräftfahrzeugs 2 zu der stationären, anzufahrenden Ladeeinrichtung 3 beschreibenden Positionsinformation ausgebildet ist. Dazu ist anzumerken, dass insbesondere die sekundärseitige Induktionsladevorrichtung 11 und die Empfangseinrichtung 12 hinsichtlich ihrer räumlichen Anordnung im Kraftfahrzeug 2 lediglich schematisch dargestellt sind, so dass sich die Positionsinformation auf eine entsprechend der Größe und Position der sekundärseitigen Induktionsladevorrichtung 11 anzustrebende Überdeckung mit der primärseitigen Induktionsladevorrichtung 7 der Ladeeinrichtung 3 bezieht. Das Verfahren wird im Folgenden beschrieben:

In einem ersten Schritt werden von den Sendeeinrichtungen 9 der Ladeeinrichtungen 3, 4, 5 jeweils vier sich voneinander unterscheidende Sendesignale abgestrahlt. Diese weisen jeweils eine unterschiedliche Signaleigenschaft T1 bis T4 in Form unterschiedlicher Frequenzen im Längst- und/oder Langwellenbereich, also zwischen 30 kHz und 3 MHz, auf. Von jeder durch die Antenneneinheiten 10 definierten Sendeposition wird dabei ein unterschiedliches Sendesignal abgestrahlt. Bei der anzufahrenden Ladeeinrichtung 3 sind die Signaleigenschaften T1 bis T4 beginnend bei der oben rechts dargestellten Antenneneinheit 10 im Uhrzeigersinn in der Reihenfolge T1, T2, T3, T4 angeordnet, wohingegen bei den benachbarten Ladeeinrichtungen 4, 5 diese Reihenfolge T2, T3, T4, T1 lautet. Die Zuordnung der Signaleigenschaften T1 bis T4 zu den Sendepositionen weist folglich bei allen Ladeeinrichtungen 3, 4, 5 das gleiche Sendepositionsmuster auf, wobei die Zuordnung zu den Signaleigenschaften T1 bis T4 der benachbarten Ladeeinrichtung 4, 5 gegenüber der anzufahrenden Ladeeinrichtung 3 um 90° gegen den Uhrzeigersinn gedreht ist. Es ist dabei zu beachten, dass die kraftfahrzeugseitige Empfangseinrichtung 12 so ausgebildet ist, dass sie durch einen ausreichend breitbandigen und trennscharfen Empfänger sämtliche Frequenzen der Sendesignale empfangen und voneinander unterscheiden kann.

In einem nächsten Schritt werden Empfangssignale mit den Signaleigenschaften T1 bis T4 von der Empfangseinrichtung 12 empfangen und eine Signalstärkeinformation I1 erzeugt, welche in der Figur durch ein Diagramm symbolisiert ist. Vorliegend bewegt sich das Kraftfahrzeugs 2 in Richtung eines Pfeiles P1 auf die Ladeeinrichtung 3 zu. Dabei wird für die Signaleigenschaft T1 eine Empfangsstärke R1, für die Signaleigenschaft T2 eine Empfangsstärke R2 usw. ermittelt, die durch die Signalstärkeinformation I1 beschrieben wird. Mit anderen Worten beschreibt sie ein Empfangsstärkeprofil. Da die den Signaleigenschaften T1 und T2 zugeordneten Sendepositionen näher am Kraftfahrzeug liegen als jene, denen die Signaleigenschaften T1 bis T4 zugeordnet sind, werden größere Empfangsstärken R2 und R3 als R1 und R4 erfasst. Dabei ist zu beachten, dass sämtliche Empfangsstärken R1 bis R4 lediglich rein qualitativ zur Verdeutlichung ihrer Verhältnisse zueinander dargestellt sind. Die Empfangsstärken können auch als RSSI (Received Signal Strength Indication) bezeichnet werden.

Ersichtlich bewegt sich das Kraftfahrzeug 2 in Richtung des Pfeils P1 genau auf die anzufahrende Ladeeinrichtung 3 zu, wohingegen bei einer Fahrt in Richtung eines Pfeils P2 oder P3 die benachbarte Ladeeinrichtung 4 bzw. Ladeeinrichtung 5 angefahren werden würde. Sich dabei ergebende Signalstärkeinformationen I2, I3 (bei denen die Empfangsstärken R1 bis R4 in der gleichen Reihenfolge wie bei I1 dargestellt sind) entsprechen jenen von I1, wobei aufgrund der unterschiedlichen Sendepositionen der Sendesignale mit den Signaleigenschaften T3, T4 zum Kraftfahrzeug 2 die Empfangsstärken R3, R4 stärker ausgeprägt sind als die Empfangsstärken R1, R2.

Durch Pfeile P4, P5 wird eine gedachte Fahrt des Kraftfahrzeugs 2 in Richtung einer unerwünschten Zwischenposition, in der keine Überdeckung zwischen den Induktionsladevorrichtungen 7 und 11 gegeben ist, beschrieben. Die den Pfeilen P4 und P5 zugehörigen Signalstärkeinformationen I4 und I5 zeigen ein sich deutlich von den Sendesignalinformationen I1 bis I3 unterscheidendes Empfangsstärkeprofil. Bei einer Fahrt in Richtung des Pfeils P4 liegen die der Signaleigenschaft T3 zugeordneten Signalpositionen der Ladeeinrichtungen 3, 4 sehr nah am Kraftfahrzeug, so dass sie sich überlagern und eine sehr hohe Empfangsstärke R3 an der Empfangseinrichtung 12 erzeugen. Die Empfangsstärken R2 und R4 werden dabei maßgeblich von den Sendesignalen, die von der der Signaleigenschaft T2 zugeordneten Empfangsposition der Ladeeinrichtung 4 und der der Signaleigenschaft T4 zugeordneten Sendeposition der Ladeeinrichtung 3 bestimmt, so dass sie schwächer als die Empfangsstärke R3 ausgeprägt sind. Empfangssignale mit der Signaleigenschaft T1 werden nur von sehr weit entfernten Sendepositionen abgestrahlt, so dass sich trotz Überlagerung nur eine sehr geringe Empfangsstärke R1 einstellt. Analog dazu beschreibt die dem Pfeil P5 zugeordnete Signalstärkeinformation I5 stärkere Empfangsstärken R2 und R4 als Empfangsstärken R1 und R3.

In einem anschließenden Schritt wird durch das Steuergerät 13 aus der Signalstärkeinformation die Positionsinformation ermittelt, wobei das Sendepositionsmuster, die Zuordnung der Sendepositionen zu den Signaleigenschaften T1 bis T4 aller Ladeeinrichtungen 3, 4, 5 und eine Relativposition der Sendepositionsmuster der Ladeeinrichtungen 3, 4, 5 zueinander berücksichtigt wird. Dadurch, dass die letztgenannten Informationen dem Steuergerät 13 bekannt sind, kann durch Auswertung der Sendesignalinformationen I1, insbesondere ihres Empfangsstärkeprofils, darauf geschlossen werden, dass sich das Kraftfahrzeug 2 in einer korrekten Richtung auf die anzufahrende Ladeeinrichtung 3 zubewegt. Werden hingegen andere Empfangsstärkeprofile, wie sie beispielsweise durch die Signalstärkeinformationen I2 bis I5 beschrieben werden, kraftfahrzeugseitig ausgewertet, so erkennt das Steuergerät 13 eine entsprechende Fehlausrichtung zur anzufahrenden Ladeeinrichtung 3 und ermittelt eine entsprechend andere Positionsinformation. Dies gilt analog, wenn anstelle der Ladeeinrichtung 3 eine der Ladeeinrichtungen 4, 5 anzufahren ist.

In einem weiteren Schritt steuert das Steuergerät 13 die Fahrzeugführungseinrichtung 14 zur Durchführung eines Fahrmanövers an, welches unter Berücksichtigung der Positionsinformation zum Erreichen einer vorgegebenen Position und Ausrichtung bezüglich der anzufahrenden Ladeeinrichtung 3 erforderlich ist. Das Kraftfahrzeug 2 wird folglich automatisch zur anzufahrenden Ladeeinrichtung 3 geführt, so dass die primärseitige induktive Ladevorrichtung 7 und die sekundärseitige induktive Ladeeinrichtung 11 in Überdeckung gebracht werden.

In einem insbesondere auch gleichzeitig auszuführenden Schritt steuert das Steuergerät 13 die Fahrerinformationseinrichtung 17 zur Ausgabe einer Fahrerinformation an, die ein zum Erreichen der vorgegebenen Position und/oder Ausrichtung bezüglich der anzufahrenden Ladeeinrichtung 3 umzusetzendes Fahrmanöver beschreibt. Dabei kann beispielsweise auf eine Ausgabeeinrichtung in Form eines Kombiinstruments des Kraftfahrzeugs 2 durch angezeigte Pfeile und ausgegebene Töne eine Veränderung der vom Fahrer vorzunehmenden Lenkrichtung solange angezeigt werden, bis die primärseitige Induktionsladevorrichtung 7 und die sekundärseitige Induktionsladevorrichtung 11 in Überdeckung gebracht sind. Selbstverständlich kann in Abhängigkeit einer konkreten Ausstattung des Kraftfahrzeugs 12 eine vollständig automatische Quer- und Längsführung oder lediglich entweder eine Quer- oder eine Längsführung durch die Fahrzeugführungseinrichtung 14 erfolgen, wobei durch die Fahrerinformationseinrichtung 17 dann entsprechende die Quer- bzw. Längsführungsmaßnahmen, die der Fahrer selber auszuführen hat, betreffende Informationen ausgegeben werden. Schließlich ist es auch denkbar, dass der Fahrer die Quer- und Längsführung selbstständig nur aufgrund von Fahrerinformationen der Fahrerinformationseinrichtung 17 ausführt.

Selbstverständlich lässt sich das erfindungsgemäße Verfahren auch bei Anordnungen realisieren, die mehr als drei Ladeeinrichtungen aufweisen, wobei abwechselnd gedrehte oder auch vielfältiger variierende Sendepositionen vorgesehen sind.

Es sei schließlich noch angemerkt, dass die Induktionsladeeinheiten 8 der primärseitigen Induktionsladevorrichtungen 7 durch das Steuergerät 6 so angesteuert werden können, dass ein Übertragungsmagnetfeld generiert wird, das für möglichst viele unterschiedliche Ausführungsformen von sekundärseitigen Induktionsladevorrichtungen angepasst wird.

## Patentansprüche

1. Verfahren zur Ermittlung einer eine Relativposition eines Kraftfahrzeugs (2) zu einer stationären, anzufahrenden Ladeeinrichtung (3) beschreibenden Positionsinformation, wobei ladeeinrichtungsseitig mehrere elektromagnetische Sendesignale von jeweils unterschiedlichen in einem Sendepositionsmuster angeordneten Sendepositionen mit jeweils wenigstens einer für das Kraftfahrzeug (2) beim Empfangen unterscheidbaren Signaleigenschaft (T1 - T4) abgestrahlt werden, wonach für jedes empfangene Empfangssignal eine seine Empfangsstärke (R1 - R4) beschreibende Signalstärkeinformation (I1 - I5) erzeugt und daraus unter Berücksichtigung einer das Sendepositionsmuster und eine Zuordnung der Sendepositionen zu den Signaleigenschaften (T1 - T4) beschreibenden Senderinformation die Positionsinformation ermittelt wird.

2. Verfahren nach Anspruch 1,
**dadurch gekennzeichnet,**
**dass** sich hinsichtlich ihrer Frequenz und/oder ihrer Polarisation und/oder ihres Sendezeitraums in einem zeitlichen Senderaster als Signaleigenschaft (T1 - T4) unterscheidende Sendesignale abgestrahlt werden.

3. Verfahren nach Anspruch 1 oder 2,
**dadurch gekennzeichnet,**
**dass** die Sendesignale in einem Frequenzbereich zwischen 30 kHz und 3 MHz abgestrahlt werden.

4. Verfahren nach einem der vorhergehenden Ansprüche,
**dadurch gekennzeichnet,**
**dass** wenigstens vier, insbesondere genau vier, Sendepositionen verwendet werden.

5. Verfahren nach Anspruch 4,
**dadurch gekennzeichnet,**
**dass** als Sendepositionsmuster Eckpunkte eines Quadrats verwendet werden.

6. Verfahren nach einem der vorhergehenden Ansprüche,
**dadurch gekennzeichnet,**
**dass** wenigstens eine weitere Ladeeinrichtung (4, 5) vorhanden ist, weiche ihrerseits Sendesignale von Sendepositionen des selben Sendepositionsmusters abstrahlt, wobei unmittelbar benachbarte weitere Ladeeinrichtungen (3, 4, 5) unterschiedliche Zuordnungen der Sendepositionen zu den Signaleigenschaften (T1 - T4) aufweisen, wobei als Empfangssignal überlagerte Sendesignale der Ladeeinrichtungen (3, 4, 5) empfangen und eine zusätzlich die Zuordnung der wenigstens einen weiteren Ladeeinrichtung (4, 5) und eine Relativposition der Sendepositionsmuster der Ladeeinrichtungen (3, 4, 5) beschreibende Sendesignalinformation (I1 - I5) zur Bestimmung der Positionsinformation verwendet wird .

7. Verfahren nach Anspruch 6,
**dadurch gekennzeichnet,**
**dass** für jeweils zwei unmittelbar benachbarte Ladeeinrichtungen (3, 4, 5) eine um einen vorgegebenen Winkel, insbesondere um 90°, gedrehte Zuordnungen ihrer Sendepositionen zu den Signaleigenschaften (T1 - T4) verwendet werden.

8. Verfahren nach einem der vorhergehenden Ansprüche,
**dadurch gekennzeichnet,**
**dass** die Sendeleistung der Sendesignale derart gewählt wird, dass deren Signaleigenschaften (T1 - T4) für das Kraftfahrzeug (2) in einer Entfernung von höchstens 24 m, bevorzugt höchstens 12 m, besonders bevorzugt höchstens 6 m, zu der jeweiligen Sendeposition unterscheidbar sind.

9. Verfahren nach einem der vorhergehenden Ansprüche,
**dadurch gekennzeichnet,**
**dass** kraftfahrzeugseitig eine Fahrerinformationseinrichtung (17) verwendet wird, welche eine in Abhängigkeit der Positionsinformation ermittelte, ein zum Erreichen einer vorgegebenen Position und/oder Ausrichtung bezüglich der anzufahrenden Ladeeinrichtung (3) umzusetzendes Fahrmanöver beschreibende Fahrerinformation an einen Fahrer des Kraftfahrzeugs (2) ausgibt, und/oder eine eine Quer- und/oder Längsführung des Kraftfahrzeugs (2) beeinflussende Fahrzeugführungseinrichtung (14) verwendet wird, welche unter Berücksichtigung der Positionsinformation ein zum Erreichen einer vorgegebenen Position und/oder Ausrichtung bezüglich der anzufahrenden Ladeeinrichtung (3) umzusetzendes Fahrmanöver durchführt.

10. Anordnung (1) aus einem Kraftfahrzeug (2) und einer stationären, anzufahrenden Ladeeinrichtung (3), wobei ladeeinrichtungsseitig eine Sendeeinrichtung (9) zum Abstrahlen elektromagnetischer Sendesignale von jeweils unterschiedlichen Sendepositionen mit jeweils einer für eine kraftfahrzeugseitig vorgesehene Empfangseinrichtung (12) unterscheidbaren Signaleigenschaft (T1 - T4) vorgesehen ist, wobei eine zur Durchführung eines Verfahren nach einem der vorhergehenden Ansprüche ausgebildete Steuereinrichtung vorgesehen ist.

11. Anordnung nach Anspruch 10,
**dadurch gekennzeichnet,**
**dass** die Ladeeinrichtung (3, 4, 5) eine primärseitige Induktionsladevorrichtung (7) umfasst, wobei das Kraftfahrzeug (2) eine sekundärseitige Induktionsladevorrichtung (11) zur Übertragung elektrischer Energie von der primärseitigen Induktionsladevorrichtung (7) aufweist.

## Claims

1. Method for ascertaining positional data describing a position of a motor vehicle (2) relative to a stationary charging apparatus (3) as a destination, wherein the charging apparatus emits a plurality of electromagnetic transmit signals from respective different transmission positions located in a transmission position pattern, each transmit signal having at least one signal property (T1-T4) that is distinguishable for the motor vehicle (2) during reception, whereupon a piece of signal strength data (11-15) describing the reception strength (R1-R4) of the signal is generated for each received receive signal and the positional data is ascertained therefrom taking into account transmitter data describing the transmission position pattern and an association between the transmission positions and the signal properties (T1-T4).

2. Method according to claim 1,
**characterised in**
**that** transmit signals, which are differentiated in terms of their frequency and/or their polarisation and/or their transmission period in a chronological transmission pattern, are emitted as a signal property (T1-T4).

3. Method according to claim 1 or 2,
**characterised in**
**that** the transmit signals are emitted in a frequency range of between 30 kHz and 3 MHz.

4. Method according to any of the preceding claims,
**characterised in**
**that** at least four, in particular exactly four, transmission positions are used.

5. Method according to claim 4,
**characterised in**
**that** corner points of a square are used as a transmission position pattern.

6. Method according to any of the preceding claims,
**characterised in**
**that** at least one further charging apparatus (4, 5) is present, which, in turn, emits transmit signals from transmission positions of the same transmission position pattern, wherein directly adjacent further charging apparatuses (3, 4, 5) have different associations of the transmission positions with the signal properties (T1-T4), wherein overlapping transmit signals of the charging apparatuses (3, 4, 5) are received as received signals and additional transmit signal data (11-15) describing the association of the at least one further charging apparatus (4, 5) and a relative position of the transmission position pattern of the charging apparatuses (3, 4, 5) is used to ascertain the positional data.

7. Method according to claim 6,
**characterised in**
**that**, for each two directly adjacent charging apparatuses (3, 4, 5), an associations of their transmission positions with the signal properties (T1-T4), rotated by a predetermined angle, in particular by 90°, are used.

8. Method according to any of the preceding claims,
**characterised in**
**that** the transmission power of the transmit signals is selected such that their signal properties (T1-T4) are distinguishable for the motor vehicle (2) at a distance of a maximum of 24 m, preferably a maximum of 12 m, most preferably a maximum of 6 m, from the respective transmission position.

9. Method according to any of the preceding claims,
**characterised in**
**that**, at the motor vehicle side, a driver information apparatus (17) is used, which issues driver information, which is ascertained on the basis of the positional data and describes a driving manoeuvre to be performed in order to reach a predetermined position and/or alignment relative to the charging apparatus (3) as a destination, to a driver of the motor vehicle (2), and/or a vehicle guidance apparatus (14) that governs the lateral and/or longitudinal guidance of the motor vehicle (2) is used, which, taking into account positional data, implements a driving manoeuvre to be performed in order to reach a predetermined position and/or alignment relative to the charging apparatus (3) as a destination.

10. Arrangement (1) of a motor vehicle (2) and a stationary charging apparatus (3) as a destination, wherein at the charging apparatus side, a transmitting apparatus (9) for emitting electromagnetic transmit signals from different transmission positions, each having a signal property (T1-T4) that is distinguishable for a receiving apparatus (12), is provided at the motor vehicle side, wherein a control apparatus designed for implementing a method according to any of the preceding claims is provided.

11. Arrangement according to claim 10,
**characterised in**
**that** the charging apparatus (3, 4, 5) comprises a primary side induction charging apparatus (7), wherein the motor vehicle (2) has a secondary side induction charging apparatus (11) for transmitting electrical energy from the primary side induction charging apparatus (7).

## Revendications

1. Procédé de détermination d'une information de position décrivant une position relative d'un véhicule automobile (2) par rapport à un dispositif de charge immobile (3) à approcher, dans lequel, du côté du dispositif de charge, plusieurs signaux d'émission électromagnétiques sont diffusés depuis des positions d'émission respectivement différentes agencées selon un motif de positions d'émission avec respectivement au moins une propriété de signal (T1-T4) différentiable pour le véhicule automobile (2) lors de la réception, après quoi une information de puissance de signal (I1 - I5) décrivant sa puissance de réception (R1 - R4) est générée pour chaque signal de réception reçu, et l'information de position est déterminée à partir de là, en tenant compte d'une information d'émission décrivant le motif de positions d'émission et une affectation des positions d'émission par rapport aux caractéristiques de signal (T1-T4).

2. Procédé selon la revendication 1,
**caractérisé en ce qu'**
en ce qui concerne sa fréquence et/ou sa polarisation et/ou sa période d'émission, des signaux d'émission différents sont diffusés dans une grille d'émission temporelle comme propriété de signal (T1 - T4).

3. Procédé selon la revendication 1 ou 2,
**caractérisé en ce que**
les signaux d'émission sont diffusés dans une plage de fréquence entre 30 kHz et 3 MHz.

4. Procédé selon l'une quelconque des revendications précédentes,
**caractérisé en ce qu'**
au moins quatre positions d'émission, en particulier quatre exactement, sont utilisées.

5. Procédé selon la revendication 4,
**caractérisé en ce que**
les points d'angle d'un carré sont utilisés comme motif de positions d'émission.

6. Procédé selon l'une quelconque des revendications précédentes,
**caractérisé en ce qu'**
au moins un dispositif de charge (4, 5) supplémentaire est présent, lequel diffuse quant à lui des signaux d'émission de positions d'émission du même motif de positions d'émission, dans lequel des dispositifs de charge (3, 4, 5) supplémentaires directement adjacents présentent des affectations différentes des positions d'émission par rapport aux caractéristiques du signal (T1 - T4), dans lequel des signaux d'émission superposés des dispositifs de charge (3, 4, 5) sont reçus comme signal reçu et des informations de signal d'émission (I1 - I5) complémentaires décrivant l'affectation d'au moins un autre dispositif de charge (4, 5) et une position relative des motifs de positions d'émission des dispositifs de charge (3, 4, 5) sont utilisées pour déterminer les informations de position.

7. Procédé selon la revendication 6,
**caractérisé en ce que**
pour respectivement deux dispositifs de charge directement adjacents (3, 4, 5), une affectations détournée de leurs positions d'émission par rapport aux caractéristiques du signal (T1-T4) selon un angle prédéterminé, en particulier de 90°, sont utilisées.

8. Procédé selon l'une quelconque des revendications précédentes,
**caractérisé en ce que**
la puissance d'émission des signaux d'émission est choisie de sorte que leurs caractéristiques de signal (T1 - T4) pour le véhicule à moteur (2) soient différentiables à une distance d'au plus 24 m, de préférence d'au plus 12 m, le plus préférentiellement d'au plus 6 m, par rapport à la position d'émission respective.

9. Procédé selon l'une quelconque des revendications précédentes,
**caractérisé en ce que**
du côté du véhicule à moteur, un dispositif d'information de conducteur (17) est utilisé, lequel délivre à un conducteur du véhicule à moteur (2) des informations de conducteur déterminées en fonction des informations de position, décrivant une manœuvre de conduite à effectuer pour atteindre une position et/ou une orientation prédéterminée(s) par rapport au dispositif de charge (3) à approcher, et/ou un dispositif de guidage de véhicule (14) influençant un guidage transversal et/ou longitudinal du véhicule à moteur (2) est utilisé, lequel, en tenant compte des informations de position, effectue une manœuvre de conduite à mettre en œuvre pour atteindre une position et/ou une orientation prédéterminée(s) par rapport au dispositif de charge (3) à approcher.

10. Agencement (1) composé d'un véhicule à moteur (2) et d'un dispositif de charge immobile (3) à approcher, dans lequel, du côté du dispositif de charge, un dispositif d'émission (9) destiné à diffuser des signaux d'émission électromagnétiques depuis des positions d'émission respectivement différentes avec respectivement une caractéristique de signal (T1 - T4) différentiable pour un dispositif de réception (12) prévu, dans lequel un dispositif de commande réalisé pour effectuer un procédé selon l'une quelconque des revendications précédentes est prévu.

11. Agencement selon la revendication 10,
**caractérisé en ce que**
le dispositif de charge (3, 4, 5) comprend un appareil de charge par induction (7) du côté primaire, dans lequel le véhicule à moteur (2) présente un appareil de charge par induction (11) du côté secondaire pour transmettre de l'énergie électrique de l'appareil de charge par induction (7) du côté primaire.
